# EUROPÄISCHE PATENTANMELDUNG

(11) **EP 0 827 919 A2**
(43) Veröffentlichungstag der Anmeldung: **11.03.1998**
(21) Anmeldenummer: 97115310.1
(22) Anmeldetag: 04.09.1997
(51) Int. Cl.: B65G 15/58, B65G 57/04

(54) **Bandfördereinrichtung für die hängende Beförderung von Transportgütern mit Unterdruck**

(30) Priorität: 06.09.1996 DE 19636160
(71) Anmelder: NSM MAGNETTECHNIK GMBH, D-59399 Olfen (DE)
(72) Erfinder: Ulrich, Hans, 59379 Selm (DE); Kulik, Gerhard, 59349 Holzwickede (DE)
(74) Vertreter: Hennicke, Ernst Rüdiger

(57) **Zusammenfassung**

Bandfördereinrichtung (10) für die hängende Beförderung von Transportgütern (14), insbesondere von Blechen, die mittels einer Unterdruckeinrichtung (23) gegen ein Transportband (13) ansaugbar und von diesem von einer Übergabestelle (15) zu einer Abwurfstelle (17 bzw. 18) transportierbar sind. Um ein gleichmäßiges Ablegen der nacheinander vom Transportband geförderten Gegenstände immer zum richtigen Zeitpunkt zu ermöglichen und die abgeworfenen Bleche.dgl. ohne aufwendige Richteinheiten sauber auf einer unter der Abwurfstelle angeordneten Palette stapeln zu können, ist mindestens ein separat steuerbares Unterdruckelement (21) vorgesehen, das unabhängig von der übrigen Unterdruckeinrichtung (23) mit Unterdruck beaufschlagbar bzw. davon abkoppelbar ist. Je nach Anzahl der zusätzlichen Unterdruckelemente (21 e-g) können Bleche auf verschiedenen Stapeln (17,18) abgelegt werden.

## Beschreibung

Die Erfindung betrifft eine Bandfördereinrichtung für die hängende Beförderung von Transportgütern mit einer ebenen Kontaktfläche, insbesondere von Blechen o.dgl., die mittels einer Unterdruckeinrichtung gegen mindestens ein Transportband ansaugbar und von diesem von einer Übernahmestelle zu einer Abwurfstelle transportierbar sind.

Insbesondere in der blechverarbeitenden Industrie stellt sich häufig die Aufgabe, Bleche oder Werkstücke aus Blech wie z.B. Dosendeckel, Stanzteile in der Automobilindustrie o.dgl. hängend von einer Verarbeitungsstation zu einer weiteren Station zu transportieren. Für ferromagnetische Werkstoffe werden im allgemeinen Magnetbandförderer verwendet, bei denen das Förderband zwischen den einzelnen Magneten und den zu transportierenden Blechen angeordnet ist und bei seinem Umlauf um die Umkehrrollen die von den Magneten gehaltenen Bleche mitnimmt.

Bei nicht magnetischen Werkstoffen wie z.B. Aluminiumblechen, Kunststofftafeln oder Holzverbundwerkstoffen ist der Transport mit Magnetförderern nicht möglich; man verwendet hier Endlosförderer mit Unterdruckeinrichtung, bei denen die zu transportierenden Bauteile gegen das Förderband gesaugt werden. Die Fördereinrichtungen sind hierzu mit einem an der Fördererunterseite angeordneten Unterdruckkanal versehen, der mit einer Vakuumpumpe o.dgl. verbunden ist und der zur Seite des Förderbandes hin offen ist. Die für solche Bandförderer verwendeten Transportbänder haben im allgemeinen im Abstand voneinander angeordnete Löcher, durch die die Luft und damit die zu transportierenden Bleche angesaugt werden. Damit die einmal von der Unterdruckeinrichtung angesaugten Transportgüter von dem Transportband auch wieder abfallen können, ist der Unterdruckkanal nicht bis in den Bereich der Abwurfstelle der bekannten Förderer geführt, sondern endet ein Stück weit vor dem gewünschten Abwurfort. Die in diesen Bereich mittels des Förderbandes gelangenden Transportgegenstände werden dort nicht länger vom Unterdruck gegen das Transportband gehalten und fallen vom Förderband auf eine hierfür vorgesehene Palette o.dgl..

Diese bekannten Einrichtungen haben den Nachteil, daß das Abfallen der nacheinander transportierten Bleche o.dgl. vom Förderband unkontrolliert geschieht, d.h., daß die verschiedenen Bleche sich nicht immer am gleichen Ort vom Förderband lösen und auch die "Wurfparabel", also die Fallbahn eines jeden Bleches verschieden ist, da die Bleche, Tafeln o.dgl. an ihrem in Transportrichtung hinteren Bereich noch von Unterdruck beaufschlagt sind, während sie im vorderen Teilstück schon nicht mehr am Transportband gehalten werden. Es ist mit diesen Einrichtungen daher nicht möglich, die transportierten Gegenstände, insbesondere Bleche, Kunststofftafeln, Holzplatten usw. unterhalb ihrer Abwurfstelle sauber zu stapeln.

Aufgabe der Erfindung ist es, eine Bandfördereinrichtung der eingangs genannten Art so auszugestalten, daß damit ein gleichmäßiges Ablegen der nacheinander vom Transportband geförderten Gegenstände immer zum richtigen Zeitpunkt möglich ist, um die abgeworfenen Bleche o.dgl. ohne aufwendige Richteinheiten sauber auf einer unter der Abwurfstelle angeordneten Palette stapeln zu können.

Diese Aufgabe wird mit der Erfindung dadurch gelöst, daß wenigstens an der Abwurfstelle ein separat steuerbares Unterdruckelement vorgesehen ist, das unabhängig von der Unterdruckeinrichtung für den Transportweg vor der Abwurfstelle mit Unterdruck beaufschlagbar bzw. davon entkoppelbar ist. Erfindungsgemäß sind also mindestens zwei unabhängig voneinander mit Unterdruck beaufschlagbare Saugeinheiten vorgesehen, nämlich zum einen die für den Transport der Bleche zuständige Unterdruckeinrichtung von der Übernahmestelle der Werkstücke bis kurz vor die Abwurfstelle und zum anderen das separat steuerbare Unterdruckelement an der Abwurfstelle, das zum gewünschten Abwurfzeitpunkt von der den Unterdruck erzeugenden Einrichtung entkoppelt wird und nach dem Ablösen des abzuwerfenden Bleches wieder so rechtzeitig mit Unterdruck beaufschlagbar ist, daß das nachfolgende Blech o.dgl. wieder sicher gehalten und bis zu der Stelle transportiert wird, an der wiederum der Unterdruck von dem Unterdruckelement entkoppelt wird. Mit der Erfindung ist es also möglich, das gehaltene Werkstück an seiner gesamten, gehaltenen Fläche gleichzeitig loszulassen, so daß der Lösezeitpunkt bzw. die Stelle des Lösens vom Transportband für jeden transportierten Gegenstand derselbe ist und die Gegenstände, insbesondere Bleche, Tafeln o.dgl. unter der Abwurfstelle sauber palletiert werden.

Eine besonders vorteilhafte Ausgestaltung der Erfindung ergibt sich, wenn im Transportweg eine Vielzahl einzeln steuerbarer Unterdruckelemente angeordnet sind. Damit ist es möglich, die transportierten Gegenstände nicht nur an einer mit dem Unterdruckelement versehenen Abwurfstelle abzuwerfen, sondern an praktisch jedem beliebigen Ort auf dem Transportweg, an dem sich ein separat steuer- bzw. schaltbares Unterdruckelement befindet. Es ist somit möglich, verschieden ausgestaltete Teile wie z.B. Bleche für die Fertigung von linken und rechten Kotflügeln im Automobilbau mit der Fördereinrichtung zu transportieren und an verschiedenen Stellen hintereinander unter dem Transportband zu stapeln.

Die Unterdruckelemente haben in Transportrichtung des Transportbandes zweckmäßig eine Länge haben, die der Länge der zu transportierenden Transportgüter in Transportrichtung etwa entspricht. Sobald ein transportiertes Blech o.dgl. vollständig von dem Unterdruckelement gehalten wird, an dessen Stelle es abgeworfen werden soll, wird dieses Unterdruckelement von der Unterdruck erzeugenden Einrichtung kurz getrennt und der das Blech haltende Sog fällt infolge von Undichtigkeiten im System schnell ab, so daß das Blech praktisch unmittelbar nach Abschalten des Unterdruckes von dem Unterdruckelement abfällt und dieses binnen sehr kurzer Zeit wieder mit Unterdruck beaufschlagt werden kann, um das nachfolgende, vom Transportband zugeführte Werkstück sicher zu halten.

Es ist vorteilhaft, wenn wenigstens ein Teil der Unterdruckelemente mit einer eigenen, separat steuerbaren Unterdruckeinheit versehen ist. Solche Unterdruckeinheiten für ein oder mehrere Unterdruckelemente können im wesentlichen aus einer mit Druckluft beaufschlagten Venturidüse mit einem ansteuerbaren Bypass für die Druckluft bestehen, die besonders einfach zu steuern sind und für einen schnellen Aufbau des Unterdruckes bzw. einen schnellen Unterdruckabfall bei vergleichsweise niedrigem Energieaufwand sorgen. Es ist aber auch möglich, einen für alle Unterdruckelemente gemeinsamen Unterdruckerzeuger vorzusehen, wobei dann die separat zu steuernden Unterdruckelemente über ein schnell schaltbares Ventil mit diesem Unterdruckerzeuger verbindbar bzw. von diesem entkoppelbar sind.

Die Druckluft zur Erzeugung des Unterdruckes in dem bzw. den Unterdruckelement(en) wird vorzugsweise im Kreislauf geführt. Dies hat den Vorteil, daß die große Menge verbrauchter Druckluft nicht zu Luftverwirbelungen in der Umgebung des Förderers führt. Insbesondere muß auf diese Weise auch nicht eine große Menge Frischluft angesaugt werden, die je nach Anwendungsgebiet des Förderers erst aufwendig gereinigt werden müßte, bevor sie zum Betrieb der Venturidüsen verwendet werden könnte. Die Druckluft wird vorzugsweise in einem Druckkessel bereitgestellt und von dort über die Unterdruckelemente und eine Sammelleitung in einen Saugkessel geführt, aus dem die dann entspannte Luft mittels eines Verdichters angesaugt und die verdichtete Luft im Druckkessel gespeichert wird. Um den Luftverlust bzw. Luftzuwachs bei der Umwälzung auszugleichen, ist der Saugkessel zweckmäßig mit mindestens einer zur Umgebung offenen Ausgleichsklappe versehen, die einen Eintritt von Frischluft bzw. einen Austritt von Abluft, ggf. über ein Filterelement erlaubt.

Die Ansteuerung des bzw. der Unterdruckelemente kann über mindestens ein im Transportweg angeordnetes, die Transportgüter beim Transport feststellendes Fühlelement erfolgen, die beim Erfühlen einer Kante eines transportierten Bleches das dem jeweiligen Unterdruckelement zugeordnete Bypassventil ansteuern und so für das kurzzeitige Abschalten des Unterdrucks sorgen. Besonders vorteilhaft ist es jedoch, wenn die Ansteuerung des bzw. der Unterdruckelemente über einen an der An- bzw. Umlenkwelle des Förderbandes angeordneten Inkrementaldrehgeber erfolgt.

Jedes Unterdruckelement besteht zweckmäßig im wesentlichen aus einem über seine Länge verlaufenden, zum Transportband hin offenen Unterdruckkanal, der über eine Unterdruckleitung mit der zugehörigen Unterdruckeinheit verbunden ist. Die Bandfördereinrichtung weist also eine Vielzahl von dem Transportband zugewandten Unterdruckkanälen auf, und zwar zweckmäßig so viele, wie Unterdruckelemente in dem Förderer vorhanden sind. Dabei können die Unterdruckkanäle von mindestens zwei Unterdruckelementen in einer gemeinsamen Führungsleiste für das Transportband angeordnet sein, die dann also zwei benachbarte Unterdruckelemente miteinander mechanisch verbindet. Besonders vorteilhaft ist es in diesem Zusammenhang, wenn sich die Führungsleiste im wesentlichen über die gesamte Förderlänge des Bandförderers erstreckt, wodurch alle Unterdruckelemente durch die Führungsleiste korrekt hintereinander ausgerichtet werden.

Jedes Unterdruckelement kann zusätzlich mit einer schaltbaren Magneteinheit versehen sein, wie sie für Magnetbandförderer bekannt ist. Eine solche Kombination erlaubt es, die transportierten Bleche wahlweise mittels der Magnetkraft an das Transportband anzuziehen, wenn es sich um ferromagnetische Gegenstände handelt, oder zum Halten die Unterdruckeinrichtungen zu verwenden, wenn Kunststoff, Aluminium oder andere nichtmagnetische Werkstoffe transportiert werden sollen. Auf diese Weise kann bei ferromagnetischen Werkstoffen der geringere Energieverbrauch magnetischer Einrichtungen vorteilhaft genutzt werden.

Vorteilhaft für eine Bandfördereinrichtung nach der Erfindung hat sich ein Transportband erweisen, das an seiner Transportseite mit einer Dichtschicht versehen ist mit einer Vielzahl von in Transportrichtung hintereinander angeordneten Unterdruckvertiefungen, deren Ansaugfläche groß im Verhältnis zu ihrem Volumen ist und die über Saugkanäle mit den Unterdruckkanälen in Verbindung sind. Wegen des geringen Volumens der Unterdruckvertiefungen ist bei einem solchen Transportband die Menge der nach dem Abschalten eines Unterdruckelementes wieder abzusaugenden Luft sehr gering, so daß schnell wieder der erforderliche Unterdruck an der Ansaugfläche zur Verfügung steht. Das Transportband kann an seiner den Unterdruckelementen zugewandten Innenseite eine Nut aufweisen, in die die Führungsleiste eingreift, womit vorteilhaft nicht nur ein Formschluß zwischen Transportband und Führungsleiste quer zur Transportrichtung erreicht wird, sondern auch eine hohe Dichtigkeit zwischen diesen beiden Teilen.

In vorteilhafter Ausgestaltung der Erfindung ist zweckmäßig mindestens eine unterhalb einer Abwurfstelle angeordnete Palettenhubeinrichtung vorgesehen, so daß die Fallhöhe der abgeworfenen Bleche auf den jeweiligen Stapel durch Verändern des Abstandes zwischen Förderer und Palette im konstant sein kann.

Mit der Erfindung ist es auch möglich, eine Bandförderanlage mit mindestens zwei parallel nebeneinander angeordneten, erfindungsgemäßen Bandfördereinrichtungen zu schaffen, die beispielsweise für den Transport für besonders breite Werkstücke verwendet werden kann. Bei einer solchen Bandförderanlage mit beispielsweise vier nebeneinander angeordneten Bandfördereinrichtungen können die einzelnen, an gleicher Position im Transportweg angeordneten Unterdruckelemente der nebeneinander angeordneten Bandfördereinrichtungen von einer gemeinsamen Unterdruckeinheit beaufschlagt sein. Weitere Merkmale und Vorteile der Erfindung ergeben sich aus der nachfolgenden Beschreibung und der Zeichnung, worin eine bevorzugte Ausführungsform der Erfindung an einem Beispiel näher erläutert ist. Es zeigt:
- Fig. 1: eine Bandfördereinrichtung nach der Erfindung in einer schematischen Seitenansicht;
- Fig. 2: einen Schnitt durch das fördertrumseitige Unterteil des erfindungsgemäßen Förderers;
- Fig. 3: eine Ansicht der fördertrumseitigen Unterseite des Förderers nach der Erfindung; und
- Fig. 4: eine Bandförderanlage mit vier parrallelen Bandfördereinrichtungen in einem schematischen Querschnitt.

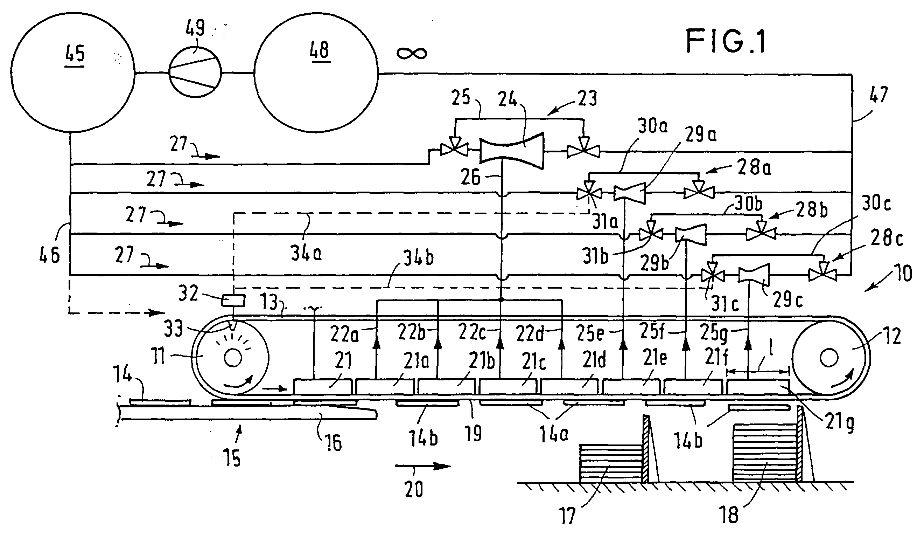

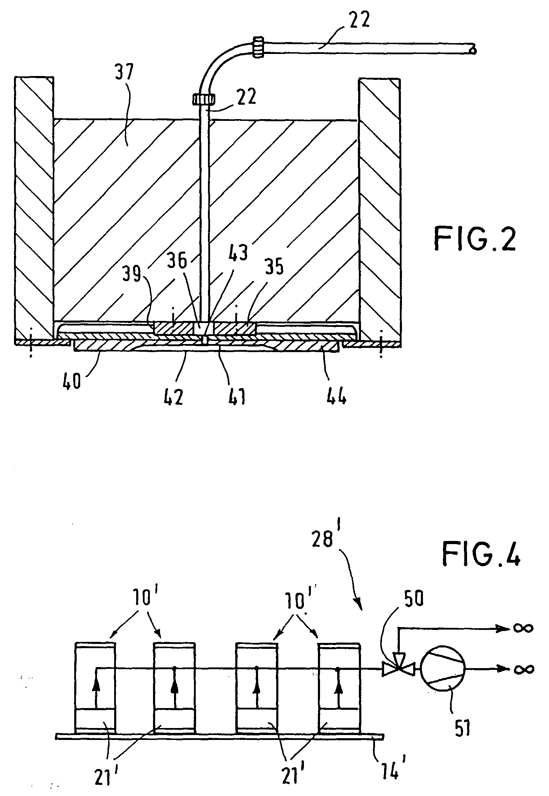

In Fig. 1 bezeichnet 10 eine Bandfördereinrichtung mit einer angetriebenen, ersten und einer zweiten Umlenkrolle 11 bzw. 12 für ein Förderband 13, das für den hängenden Transport von Aluminiumblechen 14 dient, die an einer Übergabestelle 15 von einer (nicht dargestellten) Blechstanzeinrichtung über eine Übergaberampe 16 übernommen werden. Mit der dargestellten Bandfördereinrichtung werden Bleche 14 mit zwei verschiedenen Zuschnitten transportiert, beispielsweise Bleche, die in einer späteren Verarbeitungsstation in rechte und linke Kotflügel für ein Kraftfahrzeug umgeformt werden sollen. Aus diesem Grund sollen die verschiedenen Bleche 14a bzw. 14b, die abwechselnd von der Übergaberampe 16 übernommen werden, in zwei unter dem Förderer liegende Stapel 17 und 18 sortiert werden.

Die Fördereinrichtung 10 ist an ihrer Transportseite 19 mit einer Vielzahl von in Transportrichtung 20 hintereinander angeordneten Unterdruckelementen 21 versehen, deren Länge l in Transportrichtung 20 der Länge der transportierten Bleche 14 etwa entspricht.

Die in Transportrichtung vorderen Unterdruckelemente 21 a-d sind über Unterdruckleitungen 22 an eine gemeinsame Unterdruckeinrichtung 23 angeschlossen, die im wesentlichen aus einer Venturidüse 24 mit einem Druckluftbypass 25 besteht. Die Unterdruckleitungen 25 sind an eine gemeinsame Sammelleitung 26 angeschlossen, die im engsten Querschnitt der Venturidüse 24 mündet, in der ein geringer statischer Druck herrscht, wenn durch die Düse Druckluft 27 geleitet wird.

Die in Transportrichtung hinteren, in Fig.1 im rechten Bereich der Fördereinrichtung dargestellten Unterdruckelemente 21 e-g sind über Unterdruckleitungen 25 e-g jeder mit einer eigenen Unterdruckeinheit 28 a-c versehen, die ebenfalls im wesentlichen aus einer druckluftbeaufschlagten Venturidüse 29 a-c und zugehörigen Bypassleitungen 30 a-c bestehen, wobei ein Durchfluß von Druckluft 27 entweder durch die Venturidüsen 29 oder durch die Bypasse 30 mit Hilfe von schnell umschaltbaren Drei-Wege-Ventilen 31 a-c steuerbar ist. Je nach Stellung des jeweiligen Drei-Wege-Ventils 31 a-c wird als das zugehörige Unterdruckelement 21 e-g entweder mit Unterdruck beaufschlagt und so das von diesem Unterdruckelement gerade transportierte Blech gegen das Transportband gesaugt oder das jeweilige Unterdruckelement ist vom Unterdruck entkoppelt, wenn die Druckluft 27 über den zugehörigen Bypass 30 a-c geführt wird, wodurch auf das gerade noch gehaltene Blech keine Saugkräfte mehr wirken und das Blech auf einen unterhalb des Unterdruckelementes befindlichen Stapel 17 oder 18 herunterfallen kann.

Die Ansteuerung der Drei-Wege-Ventile 31 a-c für den Abwurf der verschiedenen Bleche 14 a, 14b auf verschiedene Stapel 17, 18 erfolgt über eine geeignete Steuerung 32, die die Zählimpulse eines mit dem Antriebsrad 11 gekoppelten Inkrementaldrehgebers 33 verarbeitet und über Steuerleitungen 34 a, b den Drei-Wege-Ventilen 31a,c Schaltsignale zu den gewünschten Schaltzeitpunkten übermittelt. Wenn beispielsweise ein Blech 14a auf den in Förderrichtung 20 ersten Stapel 17 abgeworfen werden soll, wird dem 3-Wege-Ventil 31a in dem Zeitpunkt ein Schaltsignal übermittelt, wenn das abzuwerfende Blech 14a vollflächig von dem Unterdruckelement 21e gehalten wird. Die Druckluft 27 wird dann über den Bypass 30 a geleitet, so daß der Druck in der Venturidüse 29 a infolge von angesaugter Falschluft schnell ansteigt und der zum Halten der Bleche am Unterdruckelement 21 e erforderliche Sog fast schlagartig verlorengeht und das Blech 14a wie gewünscht auf den Stapel 17 abfallen kann. Unmittelbar nach dem Ablösen des Bleches 14a wird die Druckluft vom Bypass 30a wieder auf die Venturidüse 29a geschaltet, wodurch der Unterdruck an dem Unterdruckelement 21 e wieder aufgebaut wird, so daß das nachfolgende Blech 14b vom Förderband sicher auch über den Bereich des Unterdruckelementes 21e weiterbefördert wird, um auf dem nächsten Stapel 18 in der beschriebenen Weise abgeworfen zu werden.

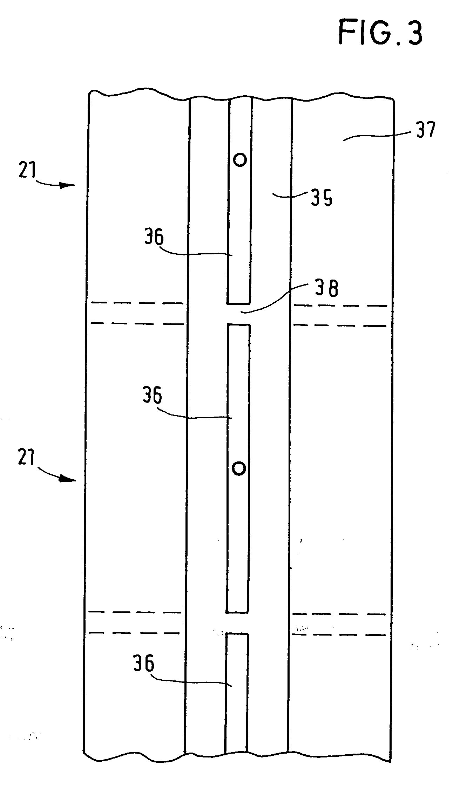

In den Fig. 2 und 3 ist der Aufbau der einzelnen Unterdruckelemente 21 näher dargestellt. Wie sich insbesondere aus Fig.2 ergibt, besteht jedes Unterdruckelement im wesentlichen aus einer unteren Führungsleiste 35 mit einem Unterdruckkanal 36, der sich über die Länge l des jeweiligen Unterdruckelementes 21 erstreckt. Dieser Unterdruckkanal, der nur eine geringe Tiefe und Breite hat, ist über die durch ein Trägerelement 37 hindurchgeführte Unterdruckleitung 22 mit der zugehörigen Venturidüse 24 bzw. 29 verbunden. Die Führungsleiste 35 erstreckt sich in der dargestellten Ausführungsform über mehrere Unterdruckelemente, wobei die Unterdruckkanäle 36 durch Stege 38 voneinander getrennt sind. Die Führungsleiste 35 greift in eine Nut 39 am Förderband 13 ein, das an seiner den Blechen zugewandten Transportseite 40 mit einer Vielzahl von im Abstand voneinander angeordneten, etwa kreisförmigen Unterdruckvertiefungen 41 versehen ist, die zwar eine vergleichsweise große Ansaugfläche 42, aber nur eine geringe Tiefe und damit nur ein geringes Volumen haben. Diese Unterdruckvertiefungen sind über dünne, das Förderband durchdringende Saugkanäle 43 mit den Unterdruckkanälen 36 verbindbar, so daß die zu transportierenden Bleche gegen die mit einer weichelastischen Dichtschicht 44 versehene Transportseite 40 des Förderbandes gesaugt werden, wenn das jeweilige Unterdruckelement unter Unterdruck steht.

Infolge der geringen, zu evakuierenden Volumina von Unterdruckvertiefungen und Unterdruckkanälen sind die Schaltzeiten der Unterdruckelemente, innerhalb derer der darin herrschende Unterdruck ab- und wieder aufgebaut wird, nur gering, so daß sichergestellt ist, daß nach einem Blechabwurf das darauf folgende Blech sicher am Förderband gehalten werden kann. Bei einem Druck der Druckluft von 6 bar und einer an den Unterdruckvertiefungen 41 herrschen Druckdifferenz von etwa 0,2 bar gegenüber dem Umgebungsdruck können bei Unterdruckelementen mit einer Baulänge von 300 mm Schaltzeiten erreicht werden, die kürzer sind als 40 ms.

Wie sich aus Fig.1 ergibt, wird die Druckluft 27 für den Betrieb der Unterdruckeinrichtungen 23 bzw. -einheiten 28 im Kreislauf geführt. Die Druckluft wird aus einem Druckbehälter 45 über Druckleitungen 46 zu den einzelnen Venturidüsen 24, 29 geführt und von diesen über Rücklaufleitungen 47 zu einem Saugkessel 48 zurückgeführt. Den Saugkessel 48 steht über nicht dargestellte Ausgleichsöffnungen mit der Umgebung ∞ in Verbindung, über die ein Luftausgleich möglich ist. Die Luft aus dem Saugkessel 48 wird von einem Verdichter 49 verdichtet und dann wieder dem Druckbehälter 45 zugeführt. Auf diese Art können Luftverwirbelungen in der Nähe des Förderers vermieden werden, die sonst durch von den Venturidüsen ausgestoßene Abluft möglich wären. Darüber hinaus muß bei dieser Anordnung lediglich die über die Ausgleichsöffnungen am Saugkessel angesaugte Luft einmalig gereinigt werden und nicht die gesamte durchgesetzte Luftmenge, die je nach Größe der Anlage leicht 20 m³/min betragen kann.

Fig.4 zeigt eine Förderanlage mit vier parallel angeordneten Bandfördereinrichtungen 10, wie sie für den Transport langer und breiter Bleche 14' verwendet wird. Bei dieser Anlage sind die vier jeweils quer zur Förderrichtung nebeneinander liegenden Unterdruckeinrichtungen 21' an einer gemeinsamen Unterdruckeinheit 28' angeschlossen, die bei der dargestellten Anlage aus einem Schaltventil 50 und einem Gebläse 51 besteht, über das der Unterdruck an den vier nebeneinander liegenden Unterdruckelementen erzeugt wird. Je nach Länge bzw. Breite oder dem Gewicht der zu transportierenden Bleche können auch noch mehr, beispielsweise sechs oder acht Bandförderer nebeneinander angeordnet werden.

Man erkennt, daß es mit der beschriebenen und dargestellten Fördereinrichtung möglich ist, einzelne Bleche, Platten u.dgl an praktisch jeder beliebigen Stelle im Transportweg vom Förderband abzuwerfen und darunter zu stapeln, wie dies bislang wegen der für einen solchen Betrieb erforderlichen kurzen Schaltzeiten nur mit Magnetbandförderern für ferromagnetische Werkstoffe möglich war. Der Ort, an dem sich ein transportiertes Blech beim Abwerfen vom Förderband löst, ist dabei immer derselbe, so daß ein sauberes Stapeln auf unter dem Förderer angeordneten Paletten möglich ist.

## Patentansprüche

1. Bandfördereinrichtung für die hängende Beförderung von Transportgütern mit einer ebenen Kontaktfläche, insbesondere von Blechen o.dgl., die mittels einer Unterdruckeinrichtung gegen mindestens ein Transportband ansaugbar und von diesem von einer Übernahmestelle zu einer Abwurfstelle transportierbar sind, **dadurch gekennzeichnet, daß** wenigstens an der Abwurfstelle (17 bzw. 18) ein separat ansteuerbares Unterdruckelement (21) vorgesehen ist, das unabhängig von der Unterdruckeinrichtung (23) für den Transportweg vor der Abwurfstelle (17 bzw. 18) mit Unterdruck beaufschlagbar bzw. davon entkoppelbar ist.

2. Bandfördereinrichtung nach Anspruch 1, **dadurch gekennzeichnet, daß** im Transportweg eine Vielzahl einzeln steuerbarer Unterdruckelemente (21) angeordnet sind.

3. Bandfördereinrichtung nach Anspruch 1 oder 2, **dadurch gekennzeichnet, daß** die Unterdruckelemente (21) in Transportrichtung (20) des Transportbandes (13) eine Länge (l) haben, die der Länge der zu transportierenden Transportgüter (14) in Transportrichtung (20) etwa entspricht.

4. Bandfördereinrichtung nach einem der Ansprüche 1 bis 3, **dadurch gekennzeichnet, daß** wenigstens ein Teil der Unterdruckelemente (21) mit einer eigenen, separat steuerbaren Unterdruckeinheit (28) versehen ist.

5. Bandfördereinrichtung nach einem der Ansprüche 1 bis 3, **dadurch gekennzeichnet, daß** die Unterdruckeinheit (28) für ein oder mehrere Unterdruckelemente (21) im wesentlichen aus einer mit Druckluft (27) beaufschlagten Venturidüse (24 bzw. 29) mit einem ansteuerbaren Bypass (25, 30) für die Druckluft (27) besteht.

6. Bandfördereinrichtung nach einem der Ansprüche 1 bis 3, **dadurch gekennzeichnet, daß** die Druckluft (27) zur Erzeugung des Unterdruckes in dem bzw. den Unterdruckelement(en) (21) im Kreislauf geführt wird.

7. Bandfördereinrichtung nach einem der Ansprüche 1 bis 3, **dadurch gekennzeichnet, daß** die Druckluft (27) in einem Druckbehälter (45) bereitgestellt wird und von dort über die Unterdruckelemente (21) und eine Sammelleitung (47) in einen Saugkessel (48) geführt wird, aus dem die dann entspannte Luft mittels eines Verdichters (49) angesaugt und die verdichtete Luft im Druckbehälter (45) gespeichert wird.

8. Bandfördereinrichtung nach einem der Ansprüche 1 bis 3, **dadurch gekennzeichnet, daß** der Saugkessel (48) mit mindestens einer zur Umgebung (∞) offenen Ausgleichsklappe versehen ist.

9. Bandfördereinrichtung nach einem der Ansprüche 1 bis 3, **dadurch gekennzeichnet, daß** die Ansteuerung des bzw. der Unterdruckelemente (21) über mindestens ein im Transportweg angeordnetes, die Transportgüter (14) beim Transport feststellendes Fühlelement erfolgt.

10. Bandfördereinrichtung nach einem der Ansprüche 1 bis 3, **dadurch gekennzeichnet, daß** die Ansteuerung (32) des bzw. der Unterdruckelemente (21) über einen an der An- bzw. Umlenkwelle (11) des Förderbandes (13) angeordneten Inkrementaldrehgeber (33) erfolgt.

11. Bandfördereinrichtung nach einem der Ansprüche 1 bis 3**, dadurch gekennzeichnet, daß** eine gemeinsame Unterdruckeinheit (51) für alle Unterdruckelemente (21) vorgesehen ist, die über den Unterdruckelementen (21) zugeordnete, ansteuerbare Ventilmittel (50) mit diesen verbindbar bzw. von diesen entkoppelbar ist.

12. Bandfördereinrichtung nach einem der Ansprüche 1 bis 3, **dadurch gekennzeichnet, daß** jedes Unterdruckelement (21) im wesentlichen aus einem über seine Länge (l) verlaufenden, zum Transportband (13) hin offenen Unterdruckkanal (36) besteht, der über eine Unterdruckleitung (22) mit der zugehörigen Unterdruckeinheit (28) verbunden ist.

13. Bandfördereinrichtung nach einem der Ansprüche 1 bis 3, **dadurch gekennzeichnet, daß** die Unterdruckkanäle (36) von mindestens zwei Unterdruckelementen (21) in einer gemeinsamen Führungsleiste (35) für das Transportband (13) angeordnet sind.

14. Bandfördereinrichtung nach einem der Ansprüche 1 bis 3, **dadurch gekennzeichnet, daß** sich die Führungsleiste (35) im wesentlichen über die gesamte Förderlänge des Bandförderers (10) erstreckt.

15. Bandfördereinrichtung nach einem der Ansprüche 1 bis 3, **dadurch gekennzeichnet, daß** jedes Unterdruckelement (21) zusätzlich mit einer schaltbaren Magneteinheit versehen ist.

16. Bandfördereinrichtung nach einem der Ansprüche 1 bis 3, **dadurch gekennzeichnet, daß** das Transportband an seiner Transportseite (40) mit einer Dichtschicht (44) versehen ist mit einer Vielzahl von in Transportrichtung hintereinander angeordneten Unterdruckvertiefungen (41), deren Ansaugfläche (42) groß im Verhältnis zu ihrem Volumen ist und die über Saugkanäle (43) mit den Unterdruckkanälen (36) in Verbindung sind.

17. Bandfördereinrichtung nach einem der Ansprüche 1 bis 3, **dadurch gekennzeichnet, daß** das Transportband (13) an seiner den Unterdruckelementen (21) zugewandten Innenseite eine Nut (39) aufweist, in die die Führungsleiste (36) eingreift.

18. Bandfördereinrichtung nach einem der Ansprüche 1 bis 3, **gekennzeichnet durch** mindestens eine unterhalb einer Abwurfstelle (17 bzw. 18) angeordnete Palettenhubeinrichtung.

19. Bandförderanlage mit mindestens zwei parallel nebeneinander angeordneten Bandfördereinrichtungen nach einem der Ansprüche 1 bis 18.

20. Bandförderanlage nach Anspruch 19, **dadurch gekennzeichnet, daß** die einzelnen, an gleicher Position im Transportweg angeordneten Unterdruckelemente (21') der nebeneinander angeordneten Bandfördereinrichtungen (10) von einer gemeinsamen Unterdruckeinheit (50,51) beaufschlagt sind.
